# EUROPÄISCHE PATENTANMELDUNG

(11) **EP 2 233 671 A1**
(43) Veröffentlichungstag der Anmeldung: **29.09.2010**
(21) Anmeldenummer: 10169797.7
(22) Anmeldetag: 18.01.2006
(51) Int. Cl.: E05D 5/02, F16B 5/02

(54) **Montageschraube zur Befestigung von Beschlagteilen**

(30) Priorität: 03.02.2005 DE 202005001660 U
(62) Teilanmeldung aus: 06706271.1
(71) Anmelder: Dr. Hahn GmbH & Co. KG, 41189 Mönchengladbach-Wickrath (DE)
(72) Erfinder: Die Erfindernennung liegt noch nicht vor
(74) Vertreter: Kluin, Jörg-Eden

(57) **Zusammenfassung**

Eine Montageschraube (100) zur Befestigung von Beschlagteilen, insbesondere von Bandteilen, an Profile, die zumindest eine Befestigungswandung (8, 9), an der das Beschlagteil anliegt, und eine weitere parallel zur Befestigungswandung verlaufende zweite Wandung (10, 11) aufweisen, mit einem ein Außengewinde (14) aufweisenden Gewindeteil (12), das in eine Lochung (28) in der Befestigungswandung (8, 9) einschraubbar ist, und mit einem mit dem Gewindeteil (12) fluchtenden Abstützteil (19), das in eine Lochung (26) in der zweiten Wandung (10, 12) einführbar ist, wobei das Gewindeteil (12) und das Abstützteil (19) derart miteinander verbunden sind, dass die Gesamtlänge (L) der Montageschraube (100) an den Abstand zwischen der Befestigungswandung (8, 9) und der zweiten Wandung (10, 11) anpassbar ist.

## Beschreibung

Die Erfindung betrifft eine Montageschraube zur Befestigung von Beschlagteilen, insbesondere von Bandteilen, an Hohlkammerprofilen. Letztere weisen zumindest eine Befestigungswandung, an der das Beschlagteil anliegt, und eine weitere parallel zur Befestigungswandung verlaufende zweite Wandung auf.

Es ist bekannt, zur Befestigung von Bandteilen, an Hohlkammerprofilen Befestigungsplatten zu verwenden, die in eine Kammer des Hohlprofils von einer offenen Stirnseite eingeschoben werden, so dass sie die Rückseite derjenigen Wandung, an der das Band anliegen soll, hintergreifen. Die Befestigungsplatten weisen Gewindebohrungen auf, in die das Bandteil durchsetzende Befestigungsschrauben eingedreht werden. Hierzu müssen der Lage der Gewindebohrungen entsprechend Durchgangsbohrungen in die Profilwandung eingebracht werden. Die Lage der Durchgangsbohrungen wird beispielsweise mittels einer Bohrschablone festgelegt. In die Bandteile und die Durchgangsbohrungen eingreifende Zentrierhülsen dienen der exakten Positionierung des Bandes, bevor dies durch Anziehen der Befestigungsschrauben fixiert wird.

Nachteilig ist bei dieser Art der Befestigung, die beispielsweise von der Türbandserie 60 AT der Firma Dr. Hahn GmbH & Co. KG, Mönchengladbach, bekannt ist, dass Haltekräfte lediglich in eine Wandung des Hohlkammerprofils eingeleitet werden. Insbesondere bei dünnwandigen Profilen kann es zur Verformung der Profilwandung kommen. Ferner ist die Befestigung wegen der Vielzahl von durchzuführenden Arbeitsschritten und benötigten Bauteilen aufwändig.

Aus dem Gebrauchsmuster DE 202 18 699.7 ist eine Vorrichtung zur Befestigung von Beschlagteilen an Mehrkammerprofilen bekannt. Sie weist eine Montageschraube und eine Befestigungsschraube auf, wobei die Montageschraube ein Außengewinde einer Länge hat, dass mehrere Wandungen des Hohlkammerprofils bei eingedrehter Montageschraube durchsetzt werden. Am in Einbringrichtung hinteren Ende weist die Montageschraube einen Anlagebund auf. Ferner ist am hinteren Ende ein Innengewinde vorgesehen, in das die Befestigungsschraube eindrehbar und ein Innensechskant zum Angriff eines Drehwerkzeugs zum Eindrehen der Montageschraube in das Hohlkammerprofil eingearbeitet ist. Zur Befestigung eines Beschlagteils wird die Befestigungsschraube soweit in das Hohlkammerprofil eingedreht, bis der Anlagebund an der Außenprofilwandung anliegt. Anschließend wird das Beschlagteil, welches eine an den Außenumfang des Anlagebundes angepasste Zentrierbohrung aufweisen muss, aufgesetzt und durch Eindrehen der Befestigungsschraube in das Innengewinde festgesetzt.

Zwar werden bei der Befestigung des Beschlagteils mittels dieser Vorrichtung Haltekräfte in mehrere Profilwandungen eingeleitet, nachteilig ist jedoch, dass die Vorrichtung aufwendig in ihrer Herstellung ist. Ferner ist der mit der Montage des Beschlagteils verbundene Aufwand beträchtlich. Darüber hinaus kann diese Montageschraube nicht an unterschiedliche Hohlprofile mit verschiedenen Abständen zwischen der Befestigungswandung und der zweiten Wandung angepasst werden, so dass an die unterschiedlichen Profile angepasste Montageschrauben hergestellt und bevorratet werden müssen.

Der Erfindung liegt daher die Aufgabe zu Grunde, eine Montageschraube zu schaffen, die eine einfache, zuverlässige Befestigung von Beschlagteilen, insbesondere von Bandteilen, an Hohlkammerprofilen ermöglicht, sowie an Profile, die sich im Abstand zwischen der Befestigungswandung und einer zweiten Wandung unterscheiden, anpassbar und deren Herstellungsaufwand gering ist.

Diese Aufgabe wird durch die in Anspruch wiedergegebene Montageschraube gelöst.

Sie umfasst erfindungsgemäß ein ein Außengewinde aufweisendes Gewindeteil, das in eine Lochung in der Befestigungswandung des Profils einschraubbar ist. Das Außengewinde kann selbstschneidend ausgebildet sein. In diesem Falle ist der Montageaufwand, der mit der Befestigung eines Beschlagteils mit einer erfindungsgemäßen Montageschraube verbunden ist, gegenüber einer solchen mit nicht selbstschneidendem Gewinde reduziert, da in die Befestigungswandung des Profils kein Innengewinde hineingeschnitten werden muss.

Ferner weist die erfindungsgemäße Montageschraube ein mit dem Gewindeteil fluchtendes Abstützteil auf, das in eine Lochung in der zweiten Wandung einführbar ist. Überraschenderweise hat sich gezeigt, dass es nicht - wie im Stand der Technik üblich - erforderlich ist, dass die Montageschraube auch in die zweite Wandung mit einem Gewinde eingreift, sondern es ausreicht, wenn ein Eingriff in die zweite Wandung erfolgt, der ein Verkippen der Montageschraube in dem Profil verhindert. Die erfindungsgemäße Montageschraube ist mit anderen Worten in die zweite Profilwandung lediglich hineingesteckt.

Das Gewindeteil und das Abstützteil der erfindungsgemäßen Montage sind derart miteinander verbunden, dass die Gesamtlänge der Montageschraube an den Abstand zwischen der Befestigungswandung und der zweiten Wandung anpassbar ist. Durch diese Maßnahme kann die Montageschraube bei Profilen eingesetzt werden, die sich im Abstand zwischen der Befestigungswandung und der zweiten Wandung unterscheiden. Die Herstellungs- und Lagerhaltungskosten werden hierdurch reduziert, da für verschiedene Profile nicht unterschiedliche Montageschrauben hergestellt und bevorratet werden müssen.

Besonders bevorzugt ist eine konstruktive Variante der erfindungsgemäßen Montageschraube, bei der das Abstützteil einen Schaft, der in eine zentrale Ausnehmung des Gewindeteils hineinragt, umfasst. Durch diese Maßnahme können unterschiedliche Längen der Montageschraube eingestellt und diese somit an verschiedene Abstände der Befestigungswandung und der zweiten Wandung des Profils angepasst werden, indem der Schaft unterschiedlich weit in die zentrale Ausnehmung des Gewindeteils eingeschoben wird.

Um zu vermeiden, dass beim Eindrehen des Gewindeteils der Montageschraube in die Befestigungswandung und dem damit verbundenen Einrücken des Abstützteils in die Lochung der zweiten Wandung das Abstützteil in die zentrale Ausnehmung des Gewindeteils hineinrutscht, sind die zentrale Ausnehmung und der Schaft vorzugsweise derart ausgebildet, dass der Schaft mit der zentralen Ausnehmung einen Presssitz bildet. Die an das jeweilige Profil angepasste Länge der Montageschraube - auch als "individuelles Einstellmaß" bezeichnet - kann dann dadurch hergestellt werden, in dem vor der Verwendung der Montageschraube das Abstützteil mittels eines geeigneten Schlag- oder Presswerkzeugs in die zentrale Ausnehmung eingepresst wird, bis das gewünschte Einstellmaß erzielt ist.

Ein besonders dauerhafter Presssitz kann erzielt werden, wenn der Außenumfang des Schaftes gerändelt ist. Zusätzlich kann der Schaft in der zentralen Ausnehmung nach Erzielen des gewünschten Einstellmaßes mittels Klebstoff fixiert werden.

Umfasst das Abstützteil an seinem freien Ende - wie besonders bevorzugt - einen Kopf, dessen Außendurchmesser etwa dem Kerndurchmesser des Gewindeteils entspricht, so wird der mit der Befestigung der Montageschraube an dem Profil verbundene Aufwand abermals reduziert, da die für den Gewindeteil in der Befestigungswandung des Profils erforderliche Lochung lediglich in die zweite Wandung ebenfalls eingearbeitet werden muss, was in einem Arbeitsgang mit demselben Werkzeug beispielsweise durch Bohren bewerkstelligt werden kann.

Der Außenumfang des Kopfes kann, wie auch derjenige des Schaftes, gerändelt sein, um somit einen festeren Sitz des Kopfes in der Lochung in der zweiten Wandung zu bewerkstelligen. Ferner können die Enden des Außengewindes und des Kopfes eine konische Fase aufweisen, um das Befestigen der Montageschraube durch die hiermit verbundene selbstzentrierende Wirkung zu erleichtern.

Bei einer ganz besonders bevorzugten Ausführungsform der erfindungsgemäßen Montageschraube umfasst das freie Ende des Gewindeteils einen radial über das Außengewinde überstehenden Rand. Letzterer kann zur Bildung einer Anlagefläche für das Beschlagteil dienen, wodurch die Befestigung des Beschlagteils in einem Arbeitsgang möglich ist, in dem die Montageschraube durch eine geeignete Lochung in dem Beschlagteil hindurch in das Profil eingeschraubt wird, nach dem sie - wie oben beschrieben - auf das erforderliche, individuelle Einstellmaß eingestellt worden ist.

In der Zeichnung ist - schematisch - ein bevorzugtes Ausführungsbeispiel einer erfindungsgemäßen Montageschraube dargestellt. Es zeigen:
- Fig. 1: ein mittels erfindungsgemäßer Montageschrauben an einem Rahmen- und einem Flügelprofil montiertes Beschlagteil in Form eines Bandes in einer Ansicht in Längsrichtung der Profile;
- Fig. 2: eine Fig. 1 entsprechende Darstellung, jedoch mit einem einen anderen Querschnitt aufweisenden Flügelprofil;
- Fig.3: das Ausführungsbeispiel der erfindungsgemäßen Montageschraube in einer teilgeschnittenen Seitenansicht sowie
- Fig. 4: die erfindungsgemäße Montageschraube in einer Ansicht gemäß Fig. 3 von links.

Die als Ganzes mit 100 bezeichneten Montageschrauben dienen bei dem in der Zeichnung dargestellten Anwendungsbeispiel der Montage von Bandlappen 1, 2 eines Bandes 3 an Hohlprofilen 4, 5 eines Rahmens 6 und eines Flügels 7.

Die Hohlprofile 4, 5 weisen jeweils eine Befestigungswandung 8, 9 und eine zu dieser beabstandete zweite Wandung 10, 11 auf.

Jede Montageschraube 100 umfasst ein Gewindeteil 12, welches eine zentrale Ausnehmung 13 in Form einer Sacklochbohrung aufweist. Der Außenumfang des Gewindeteils 12 ist mit einem selbstschneidenden Außengewinde 14 versehen, welches zum offenen Ende der zentralen Ausnehmung 13 hin einen konischen Bereich 15 hat. Das andere Ende des Außengewindes 14 grenzt an einen radial über das Außengewinde überstehenden Rand 16 an.

Von der Stirnseite 17 des Gewindeteils 12 ist symmetrisch zur Mittellängsachse S des Gewindeteils 12 ein bis zum Boden der zentralen Ausnehmung 13 reichender Innensechskant 18 eingearbeitet, der dem Angriff eines in der Zeichnung nicht dargestellten Drehwerkzeugs dient.

Die Montageschraube 100 umfasst des Weiteren ein mit dem Gewindeteil 12 fluchtendes Abstützteil 19. Es weist einen Schaft 20 auf, dessen Außenumfang an den Innenumfang der zentralen Ausnehmung 13 derart angepasst ist, dass der Schaft mit der zentralen Ausnehmung einen Presssitz bildet. Um den Kraftschluss zwischen dem Außenumfang des Schaftes 20 mit dem Innenumfang der zentralen Ausnehmung 13 zu erhöhen, ist der Außenumfang des Schaftes mit einer Rändelung 21 versehen.

An seinem aus der zentralen Ausnehmung 13 herausragenden, freien Ende trägt der Schaft 20 einen Kopf 22, der über eine konische Fase 23 in seine Stirnseite 24 übergeht. Der Außendurchmesser des Kopfes 22, der ebenfalls eine Rändelung 25 trägt, entspricht dem Kerndurchmesser des Gewindeteils 12.

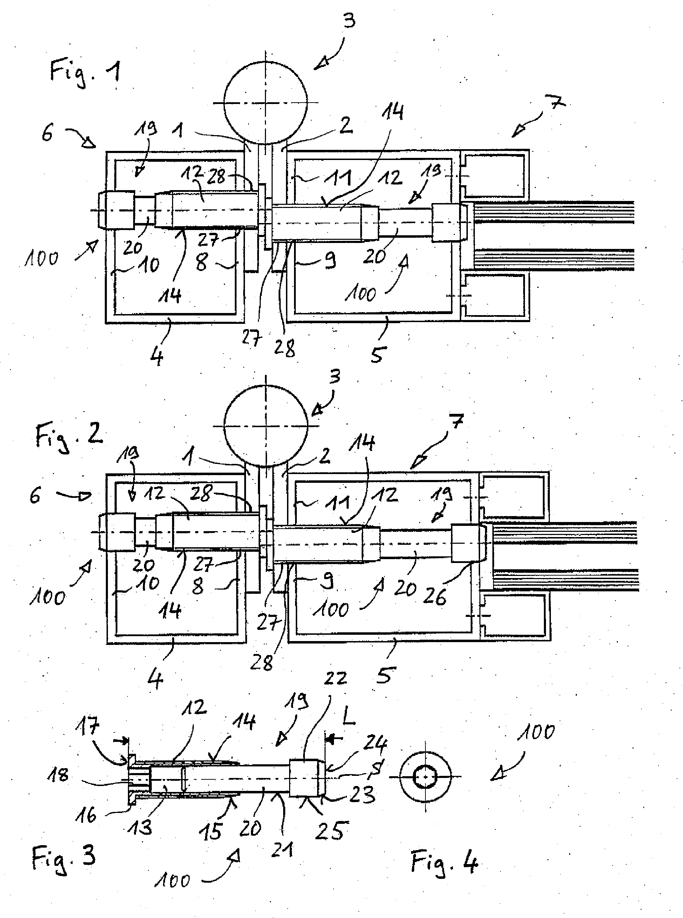

Wie in den Fig. 1 und 2 sinnfällig wird, kann die erfindungsgemäße Montageschraube 100 an Profile, die sich im Abstand der Befestigungswandung und der zweiten Wandung unterscheiden, durch Einstellung der Länge der Montageschraube 100 angepasst werden. Hierzu wird das Abstützteil 19 vor dem Einsatz der Montageschraube mittels geeigneter Schlag- oder Presswerkzeuge soweit in die zentrale Ausnehmung hineingebracht, dass der Kopf 22 des Abstützteils 19 mit seiner Umfangsfläche in eine entsprechende Lochung 26 in der jeweiligen zweiten Wandung 10, 11 des Hohlprofils 4, 5 hineinragt, wenn die Montageschraube durch eine Lochung 27 in den jeweiligen Bandlappen 1, 2 und eine Lochung 28 in der jeweiligen Befestigungswandung 8, 9 soweit eingedreht ist, dass der Rand 16 im jeweiligen Bandlappen gegen die zugehörige Befestigungswandung drückt.

### Bezugszeichenliste

- 100: Montageschraube
- 1: Bandlappen
- 2: Bandlappen
- 3: Band
- 4: Hohlprofil
- 5: Hohlprofil
- 6: Rahmen
- 7: Flügel
- 8: Befestigungswandung
- 9: Befestigungswandung
- 10: zweite Wandung
- 11: zweite Wandung
- 12: Gewindeteil
- 13: zentrale Ausnehmung
- 14: Außengewinde
- 15: konischer Bereich
- 16: Rand
- 17: Stirnseite
- 18: Innensechskant
- 19: Abstützteil
- 20: Schaft
- 21: Rändelung
- 22: Kopf
- 23: Fase
- 24: Stirnseite
- 25: Rändelung
- 26: Lochung
- 27: Lochung
- 28: Lochung

- L: Länge
- S: Mittellängsachse

## Patentansprüche

1. Montageschraube (100) zur Befestigung von Beschlagteilen, insbesondere von Bandteilen, an Profile, die zumindest eine Befestigungswandung (8, 9), an der das Beschlagteil anliegt, und eine weitere parallel zur Befestigungswandung verlaufende zweite Wandung (10, 11) aufweisen,
mit einem ein Außengewinde (14) aufweisenden Gewindeteil (12), das in eine Lochung (28) in der Befestigungswandung (8, 9) einschraubbar ist,
mit einem mit dem Gewindeteil (12) fluchtenden Abstützteil (19), das in eine Lochung (26) in der zweiten Wandung (10, 12) einführbar ist,
wobei das Gewindeteil (12) und das Abstützteil (19) derart miteinander verbunden sind, dass die Gesamtlänge (L) der Montageschraube (100) an den Abstand zwischen der Befestigungswandung (8, 9) und der zweiten Wandung (10, 11) anpassbar ist.

2. Montageschraube nach Anspruch 1,
**dadurch gekennzeichnet,**
**dass** das Abstützteil (19) einen Schaft (20), der in eine zentrale Ausnehmung (13) des Gewindeteils (12) hineinragt, umfasst.

3. Montageschraube nach Anspruch 2,
**dadurch gekennzeichnet,**
**dass** der Schaft (20) mit der zentralen Ausnehmung (13) einen Presssitz bildet.

4. Montageschraube nach Anspruch 2 oder 3,
**dadurch gekennzeichnet,**
**dass** der Außenumfang des Schaftes (20) gerändelt ist.

5. Montageschraube nach einem der Ansprüche 2 bis 4,
**dadurch gekennzeichnet,**
**dass** der Schaft (20) in der zentralen Ausnehmung (13) mittels Klebstoff fixiert ist.

6. Montageschraube nach einem der Ansprüche 2 bis 5,
**dadurch gekennzeichnet,**
**dass** das Abstützteil (19) an seinem freien Ende einen Kopf (22) umfasst, dessen Außendurchmesser etwa dem Kerndurchmesser des Gewindeteils (12) entspricht.

7. Montageschraube nach Anspruch 6,
**dadurch gekennzeichnet,**
**dass** der Außenumfang des Kopfes (22) gerändelt ist.

8. Montageschraube nach einem der Ansprüche 1 bis 7,
**dadurch gekennzeichnet,**
**dass** das freie Ende des Gewindeteils (12) einen radial über das Außengewinde überstehenden Rand (16) umfasst.
